Europäisches Patentamt

European Patent Office

Office européen des brevets

(11) Publication number· 0 298 716
A1

## (12) EUROPEAN PATENT APPLICATION

(21) Application number: 88306151.7

(51) Int. Cl.⁴ B60R 25/00

(22) Date of filing: 06.07.88

(30) Priority: 07.07.87 GB 8715930

(43) Date of publication of application:
11.01.89 Bulletin 89/02

(84) Designated Contracting States:
AT BE CH DE FR LI LU NL SE

(71) Applicant: Hedges, Leslie
164 Enstone Tanhouse
Skelmersdale Lancashire(GB)

(72) Inventor: Hedges, Leslie
164 Enstone Tanhouse
Skelmersdale Lancashire(GB)

(74) Representative: Lyons, Andrew John et al
ROYSTONS 531 Tower Building Water Street
Liverpool L3 1BA(GB)

(54) Wheel clamp.

(57) A wheel clamp for fitting to a tyred wheel comprises two elongate arms (1, 3) pivotable relative to one another in a scissor-like manner for movement between a collapsed and an expanded position, which arms are hooked (7, 9, 11, 13) at each of their opposite ends and wherein locking means (37, 39, 41) is provided to retain said scissor-like arms in their expanded position with said hooked ends embracing the tyred wheel claw-like preventing removal of the clamp without first releasing the locking means. The clamp thereby immobilises the wheel from rotation.

FIG.4

EP 0 298 716 A1

## Wheel Clamp

The present invention relates to a wheel clamp with the intended function of immobilising a motor vehicle or wheeled trailer.

Vehicles or wheeled trailers left unattended are liable to be removed by the would-be thief and accordingly any device which can deter such is to be applauded. The wheel clamp is one such device, origianlly introduced to immobilise vehicles illegally parked so that the owner has to pay a fine to secure release of the clamp to permit driving away; and now recognised by owners of vehicles as a means of deterring theft of their vehicles.

However, known wheel clamps are either complicated to fit, heavy or a combination of both, which deter their use.

Accordingly, it is an aim of the present invention to provide a wheel clamp which is sufficiently robust for its intended purpose and yet which for the owner is relatively easy to fit and remove and furthermore is of acceptable weight for handling purposes.

According to the present invention there is provided a wheel clamp for fitting to a tyred wheel comprising two elongate members pivotable relative to one another in a scissor-like manner for movement between a collapsed and an expanded position, which arms are hooked at each of their opposite ends and wherein locking means is provided to retain said scissor-like arms in their expanded position with said hooked ends embracing the tyred wheel claw-like preventing removal of the clamp without first releasing the locking means. The clamp thereby immobilises the wheel from rotation.

The hooked ends are preferably J-shaped, more especially squared off at the corners, with the free end of the hook directed inwardly in use. We find it a particular aid to security if each of the opposite hooked ends of one arm are interconnected to a respective one of the hooked ends of the other arm. Any convenient linking mechanism allowing movement between the expanded and collapsed positions can be employed such as a chain or wire cable especially permanently attached, but we prefer to use an articulated link say with two elongate members pivotted to one another and one each to a respective one of the hooked ends.

We prefer to have a stop to limit expansion of the scissor frame so that the links are constrained to pivot outwardly. The stop may be provided adjacent said common pivot point for the links, and comprise such as a lug extending from one link and abutted by the other.

The distance between the hooked ends allows fitting about the wheel at ground level when the arms are in their collapsed position.

As part of the locking means we prefer to provide a bar pivoted to one of the arms - preferably towards its outer end and adapted for coupling to the other arm. Advantageously a pair of locking bars may be provided, one above the pivot point and one below the pivot point. A pad lock can be used to provide the coupling. Advantageously, we provide a latch member, conveniently pivoted to the or a locking bar, which latch member serves to hold the two arms in their collapsed state for convenience of carrying. We also find it convenient to have a carrying handle attached to one of said arm members disposed centrally with respect to the centre of gravity of the device.

We also find it advantageous to have a chock-like abutment on each of the arms, one to each of the hooked ends which in use are lowermost and intended to be in contact with the ground. We find it particularly advantageous to have said chock as an inverted V-shape piece with one side lying tangentially to the tyre tread and the other inclined away from it and towards the ground. We also find that providing a further inclined leg extending from the hooked end towards the ground and said inclined leg gives additional benefits. By having two such legs to each chock - we find that any attempt to drive the wheel, out of the clamp causes the legs to dig into the ground so inhibiting movement. Providing projections or barb-like lugs on say said further inclined leg helps additionally to inhibit movement and additional benefit results if those are positioned to resist sideways movement also say by forming same on the end edge of one or both of the inclined legs.

Additionally, we like to attach to one of the arms, generally coaxial of the pivot, a plate to prevent access to the wheel nuts so that these cannot be undone and the wheel removed.

The present invention will now be described further hereinafter by way of example only with reference to the accompanying drawings; in which:

Figure 1 is a front view of the device in its expanded position fitted to a wheel;

Figure 2 is a rear view of the device fitted;

Figure 3 is a side view of the device fitted;

Figure 4 is a perspective view showing the device towards its collapsed position;

Figure 5 is a perspective view of the device in its expanded position and showing further detailed features; and

Figure 6 is a perspective view of a modified wheel clamp in its expanded position.

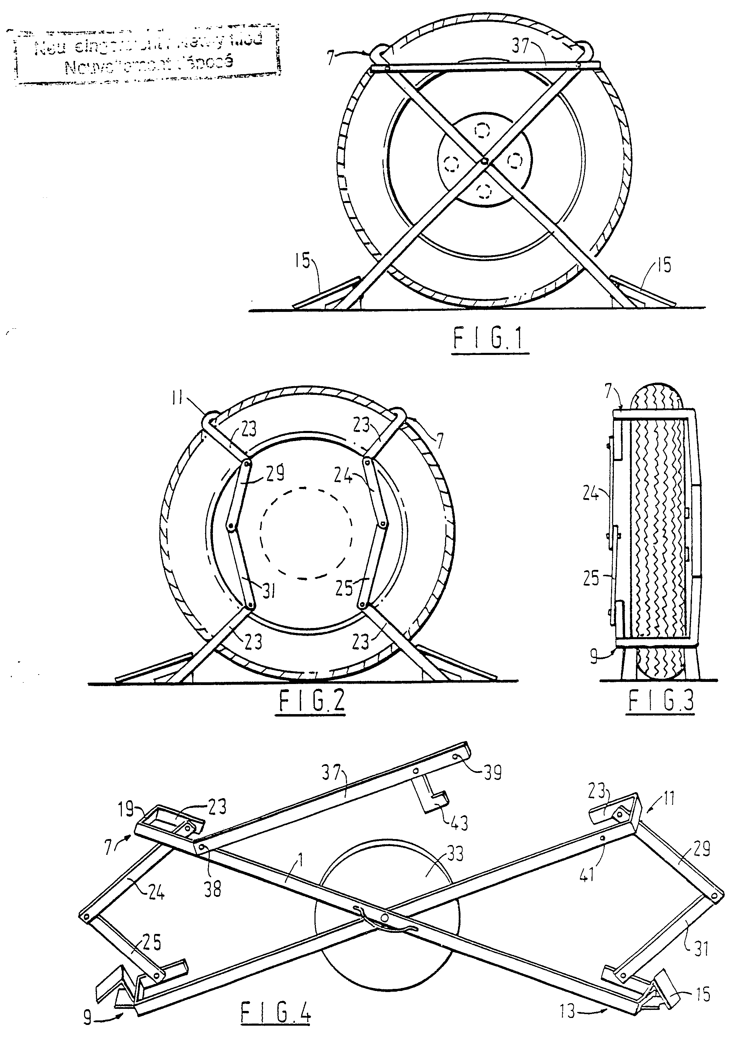

Referring to Figures 1 to 5 of the accompanying drawings, a wheel clamp is illustrated having two arm members 1, 3 pivoted at 5 substantially intermediate their length and with each end of the arm members hooked as at 7, 9, 11, 13. Each of the hooked ends conveniently comprise transversely directed limp 21 extending at right angles from the arm member with which is associated and a finger 23 disposed generally parallel to the arm member and directed inwardly i.e. towards the pivot axis 5. The hooked end is arranged to fit about the tyre of a wheel with the limb 21 extending across the tread of the tyre and the finger 23 extending generally radially across at least part of the tyre sidewall. One hooked end 9, 13 of each member provides a ground contacting foot and includes a chock formed of an inverted V-shaped member 15 having one limb 16 positioned in use to be substantially tangential to a wheel and its other limb 17 directed groundward for penetrating the ground if that chock is subject to wheel loading, say on an attempt to move the vehicle also giving rise to binding of the wheel between said chock and arm 21 of the opposite hooked end. A further limb 19 is also carried at said ground contacting end and likewise directed groundward for contact therewith on loading or otherwise if desired. Such limb 19 may carry, barbs 20 or other projections for ground engagement and especially orientated to resist movement in a transverse direction, i.e. parallel to pivot axis at 5.

The finger 23 of one hooked end 7 of arm member 1 is coupled to the finger 23 of hooked end 9 of the other arm member by a pair of links 24, 25. The links are pivoted to themselves at 27 and a respective one to the hooked ends 7, 9. Similarly the hooked ends 11, 13 are coupled by similar pivoted links 29, 31. The links allow pivoting of the scissor or like arm members between expanded and contracted positions, and provide abutments further preventing withdrawal of the wheel clamp when expanded.

Also provided is a cover plate 33 to fit over the wheel hub and thereby, in use, obstruct access to the wheel nuts to prevent undoing and removal of the wheel with clamp in position. A carrying handle is shown at 35.

Also provided is a locking arm 37 pivotally attached at 38 to arm 1 and having means for coupling it to the arm 3 when the arms in their expanded position. Such coupling can conveniently comprise a padlock (not illustrated) with the arm thereof extending through holes 39, 41 which are disposed in alignment with the arm in their expanded position.

Figure 4 shows the wheel clamp towards its collapsed position, further movement being possible allowing L-shaped leg 43, pivoted to arm 37 to locate under the pivot 5 for holding the clamp in its collapsed state for convenience of carrying. In the collapsed state the chordal dimension of the tyre adjacent the ground is such as to allow say the hooked ends 7, 9 to be fitted around the tyre periphery and thereby allow the fingers of the other ends to pass the tyre. The clamp can then be expanded as shown with reference to Figures 1 to 3 and 5 and the locating arm 37 locked in position so holding the clamp in its expanded position with the hooked ends fitting around the tyre at four locations and the links 24, 25, 29, 31 extending generally cordially. The links are provided with abutment means 45 to limit expansion of the arms and preferably arranged so that the links always point outwardly.

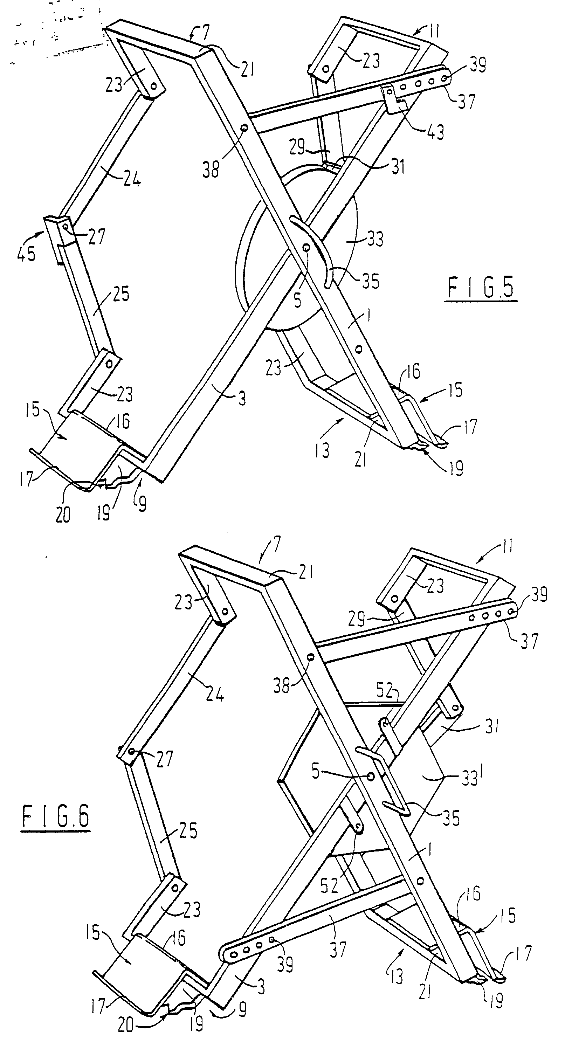

Figure 5 shows a preferred form for the chock configuration with upturned edge and further inclined ground contacting leg 19 with castellated edge 20.

Finally, the wheel clamp shown in Figure 6 is similar to that of Figure 5. Like parts have been given the same reference numerals for simplicity and only the diferences between the respective embodiments will be described. Firstly the circular plate 33 of Figure 5 is replaced by a hexagonal plate 33' which has a pair of resilient clips 52 for securing the plate 33' to arm 3. Secondly, an additional locking bar 37 is provided in the embodiment of Figure 6. This second locking bar 37 is provided below the pivot point of the clamps and is pivotable on arm 1 and securable to arm 3 again by means of a padlock through overlapping holes 39 and 41 in the bar 37 and arm 3 respectively.

## Claims

1. A wheel clamp for fitting to a tyred wheel comprising two elongate arms pivotable relative to one another in a scissor-like manner for movement between a collapsed and an expanded position, which arms are hooked at each of their opposite ends and wherein locking means is provided to retain said scissor-like arms in their expanded position with said hooked ends embracing the tyred wheel claw-like preventing removal of the clamp without first releasing the locking means.

2. A wheel clamp as claimed in claim 1, wherein the hooked ends are J-shaped with the free end of the hook directed inwardly in use.

3. A wheel clamp as claimed in claim 1 or 2, wherein each of the opposite hooked ends of one arm are interconnected to a respective one of the hooked ends of the other arm.

4. A wheel clamp as claimed in claim 3, wherein said interconnection comprises an articulated link.

5. A wheel clamp as claimed in claim 4, wherein said articulated link comprises two elongate members pivotted to one another and one each to a respective one of the hooked ends.

6. A wheel clamp as claimed in any one of claims 1 to 5 including a stop to limit expansion of the scissor frame so that the links are constrained to pivot outwardly.

7. A wheel clamp as claimed in claim 6, wherein the stop is provided adjacent said common pivot point for the links, and comprises a lug extending from one link and abutted by the other.

8. A wheel clamp as claimed in any one of claims 1 to 7, wherein the locking means comprises a bar pivotted to one of the arms and adapted for coupling to the other arm.

9. A wheel clamp as claimed in claim 8 further comprising a latch member pivotted to the locking bar, which latch member serves to hold the two arms in their collapsed state for convenience of carrying.

10. A wheel clamp as claimed in any one of claims 1 to 9 further comprising a carrying handle attached to one of said arm members disposed centrally with respect to the centre of gravity of the device.

11. A wheel clamp as claimed in any one of claims 1 to 10 having a chock-like abutment on each of the arms, one to each of the hooked ends which in use are lowermost and intended to be in contact with the ground.

12. A wheel clamp as claimed in claim 11, wherein each said chock is an inverted V-shape piece with one side lying tangentially to the tyre tread and the other inclined away from it and towards the ground.

13. A wheel clamp as claimed in any one of claims 1 to 12 further having an inclined leg extending from the hooked end towards the ground.

14. A wheel clamp as claimed in any one of claims 1 to 13 having attached to one of the arms generally coaxial of the pivot a plate to prevent access to wheel nuts of said tyred wheel so that these cannot be undone and the wheel removed.

F I G.1

F I G.2

F I G.3

F I G.4

F I G.5

F I G.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 030 308 (H.W. LÜCKE)<br>* figure 1; page 5, lines 19-29 *<br>--- | 1,2,8 | B 60 R 25/00 |
| X | EP-A-0 189 366 (SHAKBAR INVESTMENTS LTD.)<br>* figures 1,2; page 6, line 24 - page 7, line 16 *<br>--- | 1,2,8,9 | |
| X | DE-U-8 217 059 (R. SCHÄFER)<br>* page 5, paragraph 2; page 8, paragraph 2 * | 1,2,14 | |
| Y | ---<br> | 6,11,13 | |
| Y | DE-U-7 735 706 (J.J. VAN HARTESVELDT)<br>* figure * | 11 | |
| A | ---<br> | 1,2,14 | |
| A | DE-U-7 921 121 (K. JOISTEN)<br>* figure 2; page 6, line 28 - page 7, line 9 *<br>--- | 1,3,4,<br>11,14 | |
| A | EP-A-0 080 893 (ARTPACK LTD.)<br>* figures 1,2; claims 11,12 * | 1,2,7,<br>14 | TECHNICAL FIELDS SEARCHED (Int. Cl.4)<br><br>B 60 R 25/00 |
| Y | ----- | 6,13 | |

The present search report has been drawn up for all claims

| Place of search | Date of completion of the search | Examiner |
|---|---|---|
| BERLIN | 20-09-1988 | STANDRING M A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P0401)